Europäisches Patentamt

European Patent Office

Office européen des brevets

(11) Veröffentlichungsnummer: **0 256 355**
**A2**

(12) **EUROPÄISCHE PATENTANMELDUNG**

(21) Anmeldenummer: 87110750.4

(22) Anmeldetag: 24.07.87

(51) Int. Cl.⁴: **C08G 18/76** , **C08G 18/36** , **C08G 18/48** , **C08G 18/12** , **C08G 18/14** , **C08G 18/20** , **C08K 5/52** , **C08L 75/04** , //C07C41/03,C07C67/03

(30) Priorität: 02.08.86 DE 3626223

(43) Veröffentlichungstag der Anmeldung:
24.02.88 Patentblatt 88/08

(84) Benannte Vertragsstaaten:
AT BE CH DE ES FR GB IT LI NL SE

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Kluth, Hermann**
**Degerstrasse 48**
**D-4000 Düsseldorf 1(DE)**
Erfinder: **Gruber, Bert, Dr.**
**Albert-Schlangen-Strasse 28**
**D-5012 Bedburg(DE)**
Erfinder: **Meffert, Alfred, Dr.**
**Marie-Curie-Strasse 10**
**D-4019 Monheim(DE)**
Erfinder: **Hübner, Wilfried**
**Richrather Strasse 64**
**D-D-4018 Langenfeld(DE)**

(54) **Polyurethan-Prepolymere auf Basis oleochemischer Polyole, ihre Herstellung und Verwendung.**

(57) Die Erfindung betrifft Polyurethan-Prepolymere mit endständigen Isocyanatgruppen, enthaltend einen stöchiometrischen Überschuß an einem oder mehreren aromatischen Isocyanaten mit im Mittel zwei bis vier Isocyanatgruppen pro Molekül als Isocyanatkomponente und ein aus oleochemischen, wenigstens partiell ungesättigten Triglyceriden durch Epoxidation und anschließende Ringöffnung mit einem Alkohol hergestelltes Polyol als Polyolkomponente, sowie Beschleuniger, Flammschutzzusätze, Treibmittel und gegebenenfalls Verflüssiger, Farbstoffe und/oder Stabilisatoren, wobei sie als Polyolkomponente ein oder mehrere Esterpolyole oleochemischer Herkunft enthalten, die keine freien Epoxidgruppen aufweisen, durch vollständige Ringöffnung von epoxidierten Triglyceriden eines wenigstens teilweise olefinisch ungesättigte Fettsäuren enthaltenden Fettsäuregemisches mit einem oder mehreren Alkoholen mit 1 bis 12 C-Atomen sowie Umesterung der Triglyceridderivate zu Alkylesterpolyolen mit 1 bis 12 C-Atomen im Alkylrest hergestellt worden sind, ein Verfahren zur Herstellung derartiger Polyurethan-Prepolymere und ihre Verwendung als Ausgangsstoffe für die Herstellung von Polyurethanschäumen.

## Polyurethan-Prepolymere auf Basis oleochemischer Polyole, ihre Herstellung und Verwendung

Die Erfindung betrifft Polyurethan-Prepolymere aus einer Isocyanatkomponente und einer Polyolkomponente. Diese endständige Isocyanatgruppen aufweisenden Prepolymere sind Bestandteile in Formulierungen für feuchtigkeitshärtende Schaumstoffe.

Polyurethan-Prepolymere sind seit langer Zeit bekannt. Sie werden in vielfachen Zusammensetzungen auf dem Gebiet der Klebstoffe verwendet. in jüngster Zeit werden sie jedoch immer mehr für Formulierungen zur Herstellung von Schaumstoffen eingesetzt,die aufgrund ihrer gegen Feuchtigkeit, Kälte und Schall isolierenden Eigenschaften steigende Bedeutung im Bausektor erlangt haben. Bei diesen Anwendungen werden sogenannte "Einkomponenten-Polyurethanschäume" bevorzugt. Dabei handelt es sich um Mischungen aus Polyurethan-Prepolymeren, Beschleunigern, Mitteln zur Senkung der Viskosität, Treibmitteln und sonstigen Hilfsstoffen, die - gegen Feuchtigkeit geschützt - in Druckgefäßen in den Handel gebracht werden und bei Freisetzen aus den Druckgefäßen und dabei zwangsläufiger Berührung mit Feuchtigkeit oder Wasserdampf der Atmosphäre aushärten.

In der DE-AS 20 45 852 wird ein Verfahren zur Herstellung derartiger Polyurethanschäume vorgeschlagen. Dazu wird ein Polyurethan-Prepolymer auf Basis von Toluylendiisocyanat oder rohem Diphenylmethandiisocyanat einerseits und Polyol mit einem Molekulargewicht von mindestens 300 andererseits hergestellt. Dieses Prepolymer wird beim Austreten aus einem geeigneten Druckgefäß entspannt, wonach es in Gegenwart der Feuchtigkeit der umgebenden Atmosphäre auschärtet. Als Polyol wird dabei ein aus einem Alkylenoxid durch Umsetzung mit Verbindungen, die mehrere aktive Wasserstoffatome enthalten, gebildetes Polyol verwendet. Prepolymere, die auf der Basis vergleichbarer Polyolkomponenten hergestellt werden, sind auch in der US-PS 3 830 760 beschrieben.

Nach der DE-OS 27 58 114 können Polyurethan-Prepolymere für den gleichen Verwendungszweck auch auf der Basis von tertiäre Aminogruppen enthaltenden Polyester-und/oder Polyetherpolyolen mit 2 bis 8 Hydroxygruppen als Polyolkomponente hergestellt werden.

Zur Herstellung der Schaumstoffe werden die in den genannten Druckschriften erwähnten Prepolymermischungen mit fluorierten und/oder chlorierten Kohlenwasserstoffen, deren Siedepunkte bei Atmosphärendruck deutlich unterhalb der Raumtemperatur liegen, aufgeschäumt.

Alle bisher erwähnten und gemäß den offenbarten Verfahren hergestellten Schaumstoffe zeigen ein unzureichen des Brandverhalten. Bei einer Prüfung des Brandverhaltens nach DIN 4102, Teil 1, müssen sie als "leicht entflammbar" (Klassifikation B3) eingestuft werden. Die typischen maximalen Flammenhöhen derartiger Schaumstoffe liegen bei 20 bis 30 cm. Die Landesbauordnungen mehrerer Bundesländer - schreiben deswegen vor, daß derartige Schaumstoffe aus Sicherheitsgründen am bzw. im Bau nicht verwendet werden dürfen. Eine Bedarf an Polyurethanschaumstoffen mit verbessertem Brandverhalten (Klassifikation nach DIN 4102: mindestens B2 "normal entflammbar") war daher eine Forderung.

Man kann zwar mit bromhaltigen Flammschutzmitteln eine gewisse Verbesserung des Brandverhaltens bewirken, jedoch müßten dann zu viele andere Nachteile in Kauf genommen werden, wie Beeinträchtigung der Aushärtungsreaktion, Instabilität der Prepolymeren wegen Viskositätsanstieg im Gemisch.

In der DE-OS 33 17 194 werden Polyurethan-Prepolymere beschrieben, die die Mehrzahl der aufgeführten Nachteile nicht aufweisen. In den offenbarten Prepolymermischungen werden als Polyolkomponente oleochemische Polyole verwendet, die durch vollständige oder partielle Ringöffnung epoxidierter Triglyceride aus ungesättigten Fetten oder Ölen nativer Herkunft mit ein-oder mehrwertigen Alkoholen hergestellt worden sind, gegebenenfalls restliche Epoxidgruppen aufweisen und eine Gesamtfunktionalität (OH-und Epoxidgruppen) zwischen 2,0 und 4,0 aufweisen. Die in dieser Druckschrift offenbarten Polyolkomponenten sind also Derivate von Triglyceriden nativer Herkunft, die ursprünglich olefinische Doppelbindungen aufweisen, nach be kannten Methoden epoxidiert werden und vollständig oder partiell mit ein-oder mehrwertigen Alkoholen umgesetzt werden müssen. Das Brandverhalten der Polyurethanschäume, die aus derartige Polyole enthaltenden Polyurethan-Prepolymermischungen hergestellt werden, ist tendenziell günstiger als das der vorher genannten Zusammensetzungen. Das Viskositätsverhalten derartiger Mischungen ist jedoch noch nicht befriedigend. So zeigen die Mischungen bei Absenkung der Temperatur einen starken Anstieg der Viskosität. Die Verarbeitbarkeit bei niedrigen Umgebungstemperaturen ist jedoch für die Verwendung im Baubereich kritisch.

Aufgabe der vorliegenden Erfindung war es somit, neue Polyurethan-Prepolymermischungen auf Basis von oleochemischen Rohstoffen zur Verfügung zu stellen, die sich von Triglyceriden eines wenigstens teilweise olefinisch ungesättigte Fettsäuren enthaltenden Fettsäuregemisches ableiten, und ein gegenüber den bisher bekannten Mischungen deutlich besseres Brandverhalten zeigen. Außerdem sollten die unter

2

Verwendung der Polyole hergestellten Prepolymermischungen ein Viskositätsverhalten zeigen, das ihre Verarbeitung auch bei niedrigen Temperaturen ermöglicht. Dabei war eine Kompatibilität der Rohstoffe mit den bisher für diesen Zweck bekannten und bewährten Beschleunigersystemen und sonstigen Bestandteilen derartiger Mischungen, wie Treibmitteln, Farbstoffen und/oder Stabilisatoren wichtig.

Die Erfindung betrifft Polyurethan-Prepolymere mit endständigen Isocyanatgruppen, enthaltend
-einen stöchiometrischen Überschuß an einem oder mehreren aromatischen Isocyanaten mit im Mittel zwei bis vier Isocyanatgruppen pro Molekül als Isocyanatkomponente und
-ein aus oleochemischen, wenigstens partiell ungesättigten Triglyceriden durch Epoxidation und anschließende Ringöffnung mit einem Alkohol hergestelltes Polyol als Polyolkomponente, sowie
-Beschleuniger, Flammschutzzusätze, Treibmittel und gegebenenfalls Verflüssiger, Farbstoffe und/oder Stabilisatoren,
die dadurch gekennzeichnet sind, daß sie als Polyolkomponente ein oder mehrere Esterpolyole oleochemischer Herkunft enthalten, die keine freien Epoxidgruppen aufweisen, durch vollständige Ringöffnung von epoxidierten Triglyceriden eines wenigstens teilweise olefinisch ungesättigte Fettsäuren enthaltenden Fettsäuregemisches mit einem oder mehreren Alkoholen mit 1 bis 12 C-Atomen und anschließende partielle Umesterung der Triglyceridderivate zu Alkylesterpolyolen mit 1 bis 12 C-Atomen im Alkylrest hergestellt worden sind.

Die Erfindung betrifft außerdem ein Verfahren zur Herstellung von Polyurethan-Prepolymeren mit einer Isocyanatkomponente und einer Polyolkomponente sowie Beschleunigern, Flammschutzzusätzen, Treibmitteln und gegebenenfalls Verflüssigern, Farbstoffen und/oder Stabilisatoren, wobei die Polyolkomponente aus oleochemischen, wenigstens partiell ungesättigten Triglyceriden durch Epoxidation und anschließende Ringöffnung mit einem Alkohol hergestellt wird, das dadurch gekennzeichnet ist, daß man epoxidierte Triglyceride eines wenigstens teilweise olefinisch ungesättigte Fettsäuren enthaltenden Fettsäuregemisches einer vollständigen Ringöffnung mit einem oder mehreren Alkoholen mit 1 bis 12 C-Atomen unterwirft, die entstehenden Triglyceridderivate in Gegenwart eines oder mehrerer Alkohole mit 1 bis 12 C-Atomen umestert und die so entstandene Polyolkomponente mit der Isocyanatkomponente und gegebenenfalls den Beschleunigern, Flammchutzzusätzen, Treibmitteln und gegebenenfalls Verflüssigern, Farbstoffen und/oder Stabilisatoren bei Temperaturen von 5 bis 30 °C unter Druck miteinander vermischt.

Die Erfindung betrifft außerdem die Verwendung der genannten Polyurethan-Prepolymere als Ausgangsstoffe für die Herstellung von Polyurethanschäumen.

Den erfindungsgemäßen Polyurethan-Prepolymeren liegen als Isocyanatkomponente aromatische Isocyanate mit 2 bis 4 Isocyanatgruppen zugrunde. Geeignet sind sowohl Isocyanate, die alle NCO-Gruppen an einem aromatischen Ring oder an mehreren miteinander in Konjugation stehenden aromatischen Ringen enthalten, wie auch solche Isocyanate, die die NCO-Gruppen an mehreren über Alkylengruppen, beispielsweise Methylengruppen, miteinander verbunden Ringen gebunden enthalten. Geeignet sind beispielsweise 2.4-Toluylendiisocyanat und 4.4'-Diphenylmethandiisocyanat, von denen letzteres bevorzugt ist. Verwendet werden können auch Mischungen von 4.4'-Diphenylmethandiisocyanat mit höher funktionellen Isocyanaten, beispielsweise mit substituierten Diphenylmethandiisocyanaten, welche als Substituenten einen weiteren, NCO-Gruppen tragenden aromatischen Ring aufweisen. Bevorzugt verwendet werden handelsübliche flüssige Rohmischungen von Diphenylmethandiisocyanat, die oligomere Polyphenylenpolymethylenpolyisocanate enthalten. Unter diesen flüssigen Rohmischungen sind besonders solche mit Vorteil verwendbar, die eine mittlere Funktionalität von 2 bis 3,0 Isocyanatgruppen pro Molekül aufweisen. Der Einfluß der Funktionalität der Isocyanatkomponente bzw. der Polyolkomponente auf die Vernetzungsdichte und damit Härte und Sprödigkeit der Polyurethane ist dem Fachmann bekannt. In diesem Zusammenhang kann auf die allgemeine Fachliteratur verwiesen werden, beispielsweise Saunders and Frisch "Polyurethanes, Chemistry and Technology", Band XVI der Serie "High Polymers", Interscience Publishers, New York, Teile 1 und 2.

Die erfindungsgemäßen Polyurethan-Prepolymere weisen als Polyolkomponente ein aus oleochemischen, wenigstens partiell ungesättigten Triglyceriden durch Epoxidation und anschließende Ringöffnung mit einem Alkohol hergestelltes Polyol auf. Unter oleochemischen Polyolen werden also im Sinne der Erfindung Umsetzungsprodukte epoxidierter Trigylceride aus zumindest teilweise ethylenisch ungesättigte Fettsäuren enthaltenden Fettsäuregemischen mit Alkoholen verstanden.

Ausgangsstoffe für die oleochemischen Polyole der erfindungsgemäßen Polyurethan-Prepolymere sind Fette und/oder Öle pflanzlicher und/oder tierischer Herkunft, die ungesättigte Fettsäurereste enthalten, wie beispielsweise Sojaöl, Leinöl und Rizinusöl. Auch Rindertalg, Palmöl, Erdnußöl und Sonnenblumenöl und Fischöle kommen in Frage. Die ungesättigten Fettsäurereste in derartigen Ölen natürlicher Herkunft werden nach an sich bekannten Verfahren epoxidiert, so daß die olefinisch ungesättigten Fettsäurereste in Acylreste überführt werden, die eine der ursprünglichen Anzahl der olefinischen Doppelbindungen entsprechende Zahl von Epoxygruppen aufweisen. Es werden dabei Tri glyceride mit Epoxidzahlen im Bereich von etwa 3 bis 8 erhalten.

Die Umsetzung der genannten epoxidierten Triglyceride mit Alkoholen führt zu den erfindungsgemäß verwendbaren oleochemischen Polyolen. Darin tragen die Fettsäurereste an den Stellen, die im vorangehenden Reaktionsschritt epoxidiert worden waren, je eine Hydroxy-und Alkoxygruppe. Diese wird bei Ringöffnung mit einem einwertigen Alkohol mit 1 bis 12 C-Atomen eingeführt. Wird dabei der Alkohol aus der Gruppe Methanol, Ethanol, n-Propanol und/oder i-Propanol ausgewählt, wobei für diese Umsetzung Methanol bevorzugt wird, so tragen die Polyolkomponenten der erfindungsgemäßen Polyurethan-Prepolymere an den entsprechenden Fettsäureacylresten eine Hydroxygruppe und eine Methoxy-, Ethoxy-und/oder Propoxygruppe, wobei auch hier die Verbindungen bevorzugt sind, in denen je eine Hydroxy-und Methoxygruppe als Substituenten auftreten. Bis zu etwa 10 bis 15 Mol-% kann der monofunktionelle Alkohol auch durch Bifunktionen wie Ethylenglykol, Propandiol oder Diethylenglykol ersetzt sein.

Im Gegensatz zum Stand der Technik, in dem die Triglyceride unmittelbar eingesetzt wurden, zeichnen sich die Polyolkomponenten der erfindungsgemäßen Polyurethan-Prepolymere dadurch aus, daß sie die durch Umesterung mit einem Alkohol entstandenen Alkylesterpolyole als Polyolkomponente enthalten, In diesem Zusammenhang ist darauf zu verweisen, daß -in einer bevorzugten Ausführungsform der Erfindung - als Polyolkomponente der Polyurethan-Prepolymere die Methylesterpolyole zu nennen sind. Polyurethan-Prepolymere, die als Polyolkomponente die Methylesterpolyole ent halten, weisen gute Eigenschaften hinsichtlich Brandverhalten, Lagerstabilität der Prepolymermischungen auf und sind auch aufgrund der guten Zugänglichkeit bevorzugt.

Die Polyurethan-Prepolymere gemäß der Erfindung enthalten außer der Polyurethankomponente und der Polyolkomponente noch weitere Bestandteile, die als solche aus dem Stand der Technik für derartige Zwecke bekannt sind. Als solche sind in erster Linie Beschleuniger, Flammschutzzusätze und Treibmittel zu nennen. Die Polyurethan-Prepolymere gemäß der Erfindung können jehoch zusätzlich auch die Viskosität regelnde Mittel, also Verflüssiger, Farbstoffe und/oder Stabilisatoren enthalten. Dem Fachmann sind für die jeweiligen Zwecke geeignete Verbindungen bekannt.

Als Beschleuniger können die Polyurethan-Prepolymere gemäß der Erfindung zahlreiche, dem Fachmann ebenfalls bekannte Verbindungen enthalten. Als solche sind beispielsweise N-substituierte Morpholine sowie deren Mischungen mit Propylenoxid-Addukten des Triethanolamins zu nennen. Bevorzugt werden als Beschleuniger 2.2'-Diemorpholinodiethylether, N-Ethylmorpholin, 2.2-Bis-Dimethylaminodiethylether oder Mischungen der genannten Verbindungen eingesetzt.

Zur Einstellung des gewünschten Brandverhaltens werden den erfindungsgemäßen Polyurethan-Prepolymeren aus dem Stand der Technik bekannte Verbindungen zugesetzt. Als solche sind beispielsweise Tris-(Chloralkyl-)phosphate oder -arylphosphate zu nennen. Mit Vorteil wird beispielsweise Trichlorisopropylphosphat (TCPP) oder Trichlorethylphosphat (TCEP) verwendet. Die Menge der möglicherweise einsetzbaren Flammschutzmittel lieft dabei im Bereich von 8 bis 15 Gew.-%, bezogen auf die gesamte Mischung aus Prepolymeren und Treib-und Hilfsmitteln.

Zur Herstellung von Polyurethanschäumen auf der Basis der erfindungsgemäßen Polyurethan-Prepolymere ist es weiterhin notwendig, für diesen Zweck dem Fachmann bekannte Treibmittel zuzusetzen. Ein besonderer Vorteil der erfindungsgemäßen Prepolymermischungen liegt in ihrer verbesserten Löslichkeit gegenüber den bekannten Treibmitteln. Als Treibmittel sind Stoffe geeignet, die gegenüber den anderen Komponenten des Reaktionsgemisches inert sind und sich physikalisch derart verhalten, daß sie bei Entspannen der Prepolymermischung zu einer Aufschäumung des Produktes führen. Es sind beispielsweise halogenierte Kohlenwasserstoffe mit Siedepunkten unterhalb von 30°C unter Normaldruck verwendbar, wie beispielsweise Monochlordifluormethan, Dichlormonofluormethan, Dichlordifluormethan, Trichlorfluormethan und Mischungen der genannten halogenierten Kohlenwasserstoffe. Geeignet sind außerdem leicht flüchtige, unhalogenierte Kohlenwasserstoffe wie beispielsweise Propan, Isobutan, Dimethylether oder deren Mischungen bzw. Gemische aus den oben genannten halogenierten Kohlenwasserstoffen und leicht flüchtigen, nicht-halogenierten Kohlenwasserstoffen.

Als weitere Hilfsstoffe können den erfindungsgemäßen Polyurethan-Prepolymeren die Viskosität regelnde Mittel, also Verflüssiger, Farbstoffe und/oder Stabilisatoren, beispielsweise Schaumstabilisatoren oder Stabilisatoren gegen photochemischen und/oder hydrolytischen Abbau, zugesetzt werden.

Zur Variation der Eigenschaften der erfindungsgemäßen Polyurethan-Prepolymere bzw. der aus ihnen herstellbaren Schäume kann man die Prepolymeren zusätzlich zu den genannten Komponenten weitere Polyolkomponenten in untergeordneter Menge zumischen. Als solche sind beispielsweise Polyesterpolyole zu nennen. Als solche Verbindungen geeignet sind Polyesterpolyole, die aus Adipinsäure und Diethylengly-

4

kol, gegebenenfalls unter Mitverwendung von Propylenglkyol-1.2, aufgebaut sind und OH-Zahlen im Bereich von 50 bis 160 aufweisen. Es können alternativ oder in Ergänzung dazu jedoch auch Aminogruppen enthaltende Polyole mitverwendet werden. Als solche kommt beispielsweise ein Addukt von Triethanolamin an Propylenoxid im Molverhältnis 1 : 10 -30 in Frage. Als Polyol zur Modifizierung eignet sich ferner Rizinusöl. Die drei genannten Poylolkomponenten können zusätzlich in Mengen bis zu etwa 6 %, bezogen auf Prepolymeres sowie Treib-und Hilfsmittel, verwendet werden.

Erfindungsgemäß werden die Polyurethan-Prepolymere mit einer Isocyanatkomponente und einer Polyolkomponente sowie weiteren Komponenten, wie Beschleunigern, Flammschutzzusätzen, Treibmitteln und gegebenenfalls Verflüssigern, Farbstoffen und/oder Stabilisatoren, dadurch hergestellt, daß man zunächst epoxydierte Triglyceride eines wenigstens teilweise olefinisch ungesättigte Fettsäuren enthaltenden Fettsäuregemisches einer vollständigen Ringöffnung mit einem oder mehreren Alkoholen mit 1 bis 12 C-Atomen unterwirft. Als epoxidierte Triglyceride kommen in dem erfindungsgemäßen Verfahren in erster Linie solche aus Fetten und/oder Ölen pflanzlicher und/oder tierischer Herkunft in Frage. Bevorzugt wird epoxidiertes Sojaöl, Leinöl und Rizinusöl verwendet.

Die Ringöffnung des Epoxids wird bevorzugt mit einem einwertigen Alkohol mit 1 bis 12 C-Atomen durchgeführt. Dabei ist eine Verfahrensweise besonders bevorzugt, in der als einwertiger Alkohol ein Alkohol aus der Gruppe Methanol, Ethanol, n-Propanol und i-Propanol oder eine Mischung der genannten niederen Alkohole verwendet wird. Dabei wird in einer bevorzugten Ausführungsform des erfindungsgemäßen Verfahrens Methanol verwendet.

Die Bedingungen, unter denen man den genannten Verfahrensschritt durchführt, sind dem Fachmann wohlbekannt. Es werden dabei die üblichen Reaktionsbedingungen, nämlich Temperaturen von 50 bis 120 °C eingehalten. Üblicherweise wird für die Ringöffnung ein erheblicher Überschuß der Alkoholkomponente eingesetzt. Nicht umgesetzter Alkohol kann aus dem Reaktionsgemisch nach beendeter Umsetzung entfernt werden.

Simultan mit der Öffnung des Epoxidrings erfolgt die Alkoholyse bzw. Umesterung der Triglyceride und zwar bevorzugt mit den gleichen Monoalkoholen.

Als letzter Verfahrensschritt des erfindungsgemäßen Verfahrens ist die Vermischung der wie oben beschrieben entstandenen Polyolkomponente mit der Isocyanatkomponente und gegebenenfalls den als weitere Komponenten eingesetzten Beschleunigern, Flammschutzzusätzen, Treibmitteln und gegebenenfalls Verflüssigern, Farbstoffen und/oder Stabilisatoren - welche unter dem Begriff der Treib-und Hilfsmittel zu subsumieren sind - zu nennen. Es können jedoch auch zusätzlich weitere Polyolkomponenten mitverwendet werden, beispielsweise Polyesterpolyole, die aus Adipinsäure und Diethylenglykol, gegebenenfalls unter Mitverwendung von Propy lenglykol-1.2, aufgebaut sind und OH-Zahlen im Bereich von 50 bis 160 aufweisen, oder Aminogruppen enthaltende Polyole, beispielsweise Addukte von Triethanolamin und Propylenoxid im Molverhältnis 1 : 10 -30, sowie Rizinusöl. Derartige zusätzlich mitverwendbare Polyolkomponenten können bis zu 40 Gew.-%, bezogen auf die Gesamtmenge an Polyolen, ausmachen.

Die erfindungsgemäßen Polyurethan-Prepolymere können als Ausgangsstoffe für die Herstellung von Schaumstoffen verwendet werden. Die Prepolymermischungen bzw. die aus ihnen entstehenden Schaumstoffe weisen gegenüber bisher aus der Technik bekannten vergleichbaren Produkten deutliche Vorteile auf. So sind die Produkte gemäß der vorliegenden Erfindung deutlich besser hinsichtlich ihres Brandverhaltens einzustufen. Bei einer Prüfung des Brandverhaltens nach DIN-4102 entsprechen sie zumindest der Brandklasse B2 ("normal entflammbar"). Außerdem sind die Prepolymermischungen gemäß der Erfindunng wesentlich weniger viskos als vergleichbare Mischungen des Standes der Technik. Ihre Viskosität steigt auch bei Abkühlung auf 10 bis 0°C nur geringfügig an. Die Verarbeitbarkeit der Prepolymermischungen ist somit auch bei niedriger Temperatur derjenigen anderer Polyurethan-Prepolymere deutlich überlegen. Zudem tritt eine Desaktivierung der Mischung auch im Verlaufe einer längeren Lagerzeit nicht ein. Die Lagerstabilität bei üblichen Lagertemperaturen oder auch erhöhter Temperatur (40 bis 50°C) ist sehr gut bis exzellent, so daß sich auch in diesem Bereich eine Überlegenheit gegenüber Prepolymermischungen aus dem Stand der Technik zeigt.

Bei Ausschäumen der Prepolymermischungen gemäß der Erfindung und anschließender Härtung bei Raumtemperatur entstehen zudem stabile Polyurethanschäume der gewünschten Struktur und Festigkeit.

Die Erfindung wird durch die nachfolgenden Bespiele näher erläutert.

## Beispiele

## Herstellung der Ausgangsmaterialien

Die Herstellung der OH-gruppenhaltigen Komponenten erfolgte in einer heizbaren, mit Rückflußkühler und Abscheider versehenen Veresterungsapparatur. Die Reaktionen wurden unter Stickstoff durchgeführt.

### I Sojapolyol

Es wurden 4,0 kg epoxidiertes Sojaöl (6,1 % Epoxidsauerstoff) sowie 2,95 kg wasserfreies Methanol (Molverhältnis Epoxid : Methanol wie 1 : 6) in Gegenwart von 0,2 Gew.-% konzentrierter Schwefelsäure 8 Stunden bei 65°C unter Rühren erwärmt. Danach war die Reaktion im wesentlichen beendet und die überschüssige Schwefelsäure wurde mit Diethanolamin neutralisiert. Nach dem Neutralstellen wurde überschüssiges Methanol abdestilliert, zuletzt bei einem Druck von 15 bis 20 mbar. Das Reaktionsprodukt hatte folgende Kennzahlen: OH-Zahl 235, Verseifungszahl 158, Epoxidzahl 0. Bei 20°C wurde eine Viskosität von 800 mPa.s nach Brookfield gemessen. Durch Flüssigchromatographie wurde der Gehalt an Mono-, Di-und Triglyceriden festgestellt.
Triglycerid: 6,4 %
Diglycerid: 25,2 %
Monoglycerid: 68,7 %

### II Polyesterpolyol

In der gleichen Apparatur wie vorstehend beschrieben wurde ein Gemisch aus Adipinsäure und Isophthalsäure (Molverhältnis 15 : 1) zusammen mit Diethylenglykol und Propylenglykol-1,2 (Molverhältnis 1,36 : 1) zur Reaktion gebracht. Dabei betrug das Verhältnis von Diol insgesamt zu Dicarbonsäure insgesamt 1,46 : 1. Nachdem man die Reaktion bei 140°C begonnen hatte, wurde die Temperatur innerhalb von 75 Stunden - ohne Zugabe eines Veresterungskatalysators - auf 200°C gesteigert. Sodann wurde bei etwa 25 kPa überschüssiges Glykol abdestilliert. Anschließend ließ man das Reaktionsprodukt ab. Es hatte eine OH-Zahl von 140, die Säurezahl lag unterhalb 2, die Viskosität nach Brookfield betrug bei 20°C 1640 mPa.s (Spindel 4/100 Upm).

### III Polyetherpolyol

Das eingesetzte Polyetherpolyol war ein Additionsprodukt aus 1 Mol Triethanolamin und 17 Mol Propylenoxid. Die Molekularmasse lag bei ca. 1100, die OH-Zahl lag bei 150. Die Viskosität des Polyetherpolyols bei 20°C nach Brookfield lag bei 350 mPa.s (Spindel 4/100 Upm).

### Beispiele 1 bis 3

In der nachstehenden Tabelle ist in Abhängigkeit von der laufenden Nummer des Beispiels angegeben, wieviel Prozent an Sojapolyol bzw. Polyesterpolyol eingesetzt wurde. Weiterhin sind die eingesetzten Mengen an Tris-Chlorisopropylphosphat, Tris-Chlorethylphosphat sowie 2,2-Dimorpholinodiethylether sowie das eingesetzte Siloxanoxyalkylencopolymere wiedergegeben. Vorstehende Mischung wurde dann, nachdem die entsprechenden Mengen Dichlordifluormethan bzw. Trichlorfluormethan zugegeben waren, mit 4,4-Diphenylmethandiisocyanat versetzt.

Die Viskosität der in der Lösung erhaltenen Prepolymeren (80 %ig in Trichlortrifluorethen) betrug bei 23°C etwa 2100 mPa.s

## Tabelle 1

| Beispiel | 1 | 2 | 3 | 4 |
|---|---|---|---|---|
| Sojapolyol | 15,4 | 11,2 | 12,6 | 10,4 |
| Polyesterpolyol | - | 2,8 | 2,8 | - |
| Polyetherpolyol | - | - | - | - |
| Rizinusöl | - | - | - | 5,0 |
| Tris(chlorisopropyl)-phosphat | - | 12,6 | - | 12,6 |
| Tris(chlorethyl)phosphat | 11,2 | - | 11,2 | - |
| 2,2-Dimorpholinodiethylether | 0,3 | 0,3 | 0,3 | 0,3 |
| Siloxan-Oxyalkylen-Copolymer | 1,1 | 1,1 | 1,1 | 1,0 |
| 4,4'-Diphenylmethandiisocyanat | 35,0 | 35,0 | 35,0 | 35,0 |
| Dichlordifluormethan | 31,5 | 31,5 | 31,5 | 35,0 |
| Trichlorfluormethan | 5,5 | 5,5 | 5,5 | 1,5 |

Die in übliche Container abgefüllte Frothmischung ließ man in Fugen geschäumt bei 23°C und 50 % relativer Luftfeuchtigkeit aushärten. Dann wurde nach 14 Tagen das Brandverhalten nach DIN 4102 bestimmt und insbesondere die maximale Flammenhöhe in cm gemessen.

Die Flammenhöhe lag in den Beispielen 1, 2 und 4 bei 14 cm, während im Beispiel 3 nur 13 cm gemessen wurden, d.h. in allen Fällen wurde die Brandklasse B2 erreicht.

## Vergleichsversuche a bis c

In der nachfolgenden Tabelle sind die Zusammensetzungen der Vergleichsversuche a, b und c wiedergegeben, wobei in Abhängigkeit von den Buchstaben a bis c die Menge an Polyetherpolyol, Tris-(chlorisopropyl)phosphat bzw. Tris(chlorethyl)phosphat sowie das Siloxanoxyalkylencopolymere und die Menge an 4,4'-Diphenylmethandiisocyanat sowie die Treibgase wiedergegeben sind.

## Tabelle 2

| Vergleichsversuch | a | b | c |
|---|---|---|---|
| Polyetherpolyol | 15,7 | 14,3 | 15,7 |
| Tris(chlorisopropyl)phosphat | 11,2 | 12,6 | – |
| Tris(chlorethyl)phosphat | – | – | 11,2 |
| Siloxan-Oxyalkylen-Copolymer | 1,1 | 1,1 | 1,1 |
| 4,4-Diphenylmethandiisocyanat | 35,0 | 35,0 | 35,0 |
| Dichlordifluormethan | 31,5 | 31,5 | 33,5 |
| Trichlorfluormethan | 5,5 | 5,5 | 5,5 |

Es wurde in der gleichen Weise verfahren wie in den Beispielen 1 bis 4. Man ließ den bei 23°C und 50 % relativer Luftfeuchtigkeit in Fugen geschäumten Frothschaum durchhärten. Dann wurde nach 14 Tagen ebenso wie in den Beispielen das Brandverhalten nach DIN 4102 untersucht. Die maximale Flammenhöhe lag beim Versuch a bei 20 cm und bei den Versuchen b und c bei 19 cm, die Schaumstoffe sind also in die Brandklasse B3 (= leicht entflammbar) einzuordnen.

Alle wiedergegebenen Werte für die Brandversuche sind Durchschnittsuntersuchungen aus 5maligen Testen mit dem gleichen Material.

**Ansprüche**

1. Polyurethan-Prepolymere mit endständigen Isocyanatgruppen, enthaltend
-einen stöchiometrischen Überschuß an einem oder mehreren aromatischen Isocyanaten mit im Mittel zwei bis vier Isocyanatgruppen pro Molekül als Isocyanatkomponente und
-ein aus oleochemischen, wenigstens partiell ungesättigten Triglyceriden durch Epoxidation und anschließende Ringöffnung mit einem Alkohol hergestelltes Polyol als Polyolkomponente, sowie
-Beschleuniger, Flammschutzzusätze, Treibmittel und gegebenenfalls Verflüssiger, Farbstoffe und/oder Stabilisatoren,
die dadurch gekennzeichnet sind, daß sie als Polyolkomponente ein oder mehrere Esterpolyole oleochemischer Herkunft enthalten, die
(a) keine freien Epoxidgruppen aufweisen,
(b) durch vollständige Ringöffnung von epoxidierten Triglyceriden eines wenigstens teilweise olefinisch ungesättigte Fettsäuren enthaltenden Fettsäuregemisches mit einem oder mehreren Alkoholen mit 1 bis 12 C-Atomen und
(c) anschließende partielle Umesterung der Triglceridderivate zu Alkylesterpolyolen mit 1 bis 12 C-Atomen im Alkylrest hergestellt worden sind.

2. Polyurethan-Prepolymere nach Anspruch 1, dadurch gekennzeichnet, daß sie als Polyolkomponente Esterpolyole enthalten, die aus epoxidierten Fetten und/oder Ölen pflanzlicher und/oder tierischer Herkunft hergestellt worden sind.

3. Polyurethan-Prepolymere nach Ansprüchen 1 und 2, daduch gekennzeichnet, daß sie als Polyolkomponente Esterpolyole enthalten, die aus epoxidiertem Sojaöl, Leinöl und Rizinusöl hergestellt worden sind.

4. Polyurethan-Prepolymere nach Ansprüchen 1 bis 3, dadurch gekennzeichnet, daß sie als Polyolkomponente Esterpolyole enthalten, die durch vollständige Ringöffnung mit einem Alkohol aus der Gruppe Methanol, Ethanol, n-Propanol und i-Propanol oder einer Mischung der genannten Alkohole gergestellt worden sind.

5. Polyurethan-Prepolymere nach Ansprüchen 1 bis 4, dadurch gekennzeichnet, daß sie als Beschleuniger ein oder mehrere Amine aus der Gruppe 2.2'-Dimorpholinodiethylether, N-Ethylmorpholin und 2.2-Bis-Dimethylaminodiethylether enthalten.

6. Polyurethan-Prepolymere nach Ansprüchen 1 bis 5, daduch gekennzeichnet, daß sie als Flammschutzzusatz Trichlorpropylphosphat und/oder Trichlorethylphosphat enthalten.

7. Polyurethan-Prepolymere nach Anspruch 6, dadurch gekennzeichnet, daß· sie Flammschutzmittel in Mengen von 8 bis 15 Gew.-%, bezogen auf das Gemisch aus Prepolymeren und Treib-und Hilfsmittel, enthalten.

8. Polyurethan-Prepolymere nach Ansprüchen 1 bis 4, daduch gekennzeichnet, daß sie als zusätzliche Polyolkomponente ein Addukt von Triethanolamin und Propylenoxid (Molverhältnis zwischen 10 und 30) und/oder Rizinusöl enthalten.

9. Verfahren zur Herstellung von Polyurethan-Prepolymeren mit einer Isocyanatkomponente und einer Polyol komponente sowie Beschleunigern, Flammschutzzusätzen, Treibmitteln und gegebenenfalls Verflüssigern, Farbstoffen und/oder Stabilisatoren, wobei die Polyolkomponente aus oleochemischen, wenigstens partiell ungesättigten Triglyceriden durch Epoxidation und anschließende Ringöffnung mit einem Alkohol hergestellt wird, dadurch gekennzeichnet, daß man

(a) epoxidierte Triglyceride eines wenigstens teilweise olefinisch ungesättigte Fettsäuren enthaltenden Fettsäuregemisches einer vollständigen Ringöffnung mit einem oder mehreren Alkoholen mit 1 bis 12 C-Atomen unterwirft,

(b) die Triglyceridderivate in Gegenwart eines oder mehrerer Alkohole mit 1 bis 12 C-Atomen alkoholysiert bzw. umestert,

(c) die so entstandene Polyolkomponente mit der Isocyanatkomponente und dem Beschleuniger, den Flammschutzzusätzen, dem Treibmittel und gegebenenfalls dem Verflüssiger, Farbstoffe und/oder Stabilisator bei Temperaturen von 5 bis 30°C unter Druck miteinander vermischt.

10. Verfahren nach Anspruch 9, dadurch gekennzeichnet, daß man epoxidiertes Sojaöl, Leinöl oder Rizinusöl verwendet.

11. Verfahren nach Ansprüchen 9 und 10, dadurch gekennzeichnet, daß man die vollständige Ringöffnung sowie Alkoholyse bzw. Umesterung mit einem einwertigen Alkohol mit 1 bis 12 C-Atomen durchführt.

12. Verfahren nach Anspruch 11, dadurch gekennzeichnet, daß man die Reaktion mit einem Alkohol aus der Gruppe Methanol, Ethanol, n-Propanol und i-Propanol oder einer Mischung der genannten Alkohole durchführt.

13. Verfahren nach Ansprüchen 11 und 12, dadurch gekennzeichnet, daß man die Reaktion mit Methanol durchführt.